# EUROPEAN PATENT SPECIFICATION

(11) **EP 4 094 817 B1**
(45) Date of publication and mention of the grant of the patent: **05.03.2025**
(21) Application number: 21743754.0
(22) Date of filing: 19.01.2021
(51) Int. Cl.: B01D 5/00, B01D 8/00, B01D 53/26

(54) **SYSTEM FOR TREATING MOISTURE IN EXHAUST GAS**
SYSTEM ZUR BEHANDLUNG VON FEUCHTIGKEIT IN ABGAS
SYSTÈME POUR TRAITER L'HUMIDITÉ DANS UN GAZ D'ÉCHAPPEMENT

(30) Priority: 22.01.2020 JP 2020008766; 15.01.2021 JP 2021005374
(43) Date of publication of application: 30.11.2022
(73) Proprietor: Edwards Japan Limited, Yachiyo-shi, Chiba 276-8523 (JP)
(72) Inventor: EBARA Hidekazu, Yachiyo-shi Chiba 276-8523 (JP); TANAKA Masahiro, Yachiyo-shi Chiba 276-8523 (JP)
(74) Representative: Openshaw & Co.
(86) International application number: PCT/JP2021/001630
(87) International publication number: WO 2021/149667

(56) References cited:
- WO-A1-2010/066266
- CN-A- 102 309 868
- CN-U- 202 478 636
- GB-A- 2 098 874
- JP-A- 2002 166 267
- JP-A- 2004 113 949
- JP-A- 2014 145 325
- JP-A- 2018 170 194
- JP-A- 2021 042 681
- JP-A- H0 961 053
- US-A- 3 228 860
- US-A- 5 469 879
- US-A1- 2013 032 298

## Description

The present invention relates to a system for treating moisture in exhaust gas, and particularly pertains to a system for treating moisture in exhaust gas that can prevent, even in a case where there is not a space for disposing a pipe having a water sealing function, the exhaust gas from leaking to outside when the moisture or the like contained in the exhaust gas is removed, while preventing backflow of water resulting from liquefaction of the moisture in the removal process.

In process steps of manufacturing a semiconductor element, a liquid crystal panel, or a solar cell, a CVD (Chemical Vapor Deposition) process of depositing a film by using a chemical vapor reaction, an etching process, and the like are performed and, in a process chamber, various types of gases are used.

Examples of these gases include silane (SiH₄), NH₃, and H₂ which are film deposition material gases for the semiconductor element, the liquid crystal panel, and the solar cell, a gaseous fluoride such as NF₃, CF₄, C₂F₆, SF₆, CHF₃, or CF₆ to be used as a cleaning gas when a hermetically sealed chamber of a plasma CVD device or the like is to be internally cleaned with, e.g., a plasma, an inert gas such as nitrogen (N₂), and the like. The H₂ gas reacts with oxygen to provide water vapor, which is also contained in exhaust gas.

In exhaust gases other than those from the semiconductor-related manufacturing process steps mentioned above, e.g., exhaust gas from a food manufacturing device for ham or the like or from a vacuum drying device also, water vapor is contained.

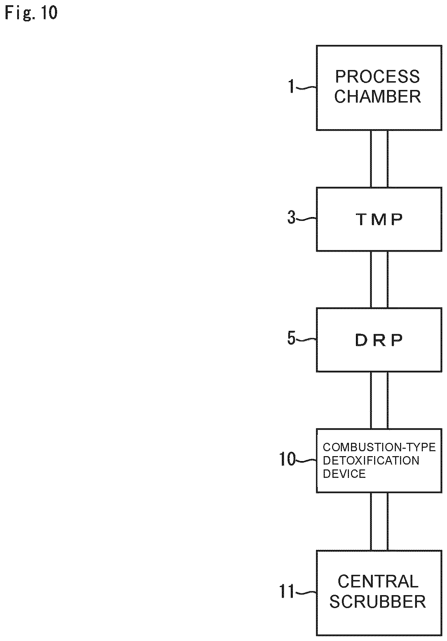

As illustrated in FIG. 10, to a process chamber 1, a turbo molecular pump 3 and a dry pump 5 are connected in series for evacuation so as to remove such toxic exhaust gas and water vapor. The process chamber 1 is configured such that, after evacuation is performed using the dry pump 5 to a degree when an operation is started, evacuation is further performed using the turbo molecular pump 3 until a required low pressure is reached. However, in a case of the CVD process or the like, it is a typical case that the turbo molecular pump 3 is omitted from a configuration of the process chamber.

The toxic exhaust gas output from the dry pump 5 is to be combusted/decomposed in a combustion-type detoxification device 10. At this time, the exhaust gas is led into the combustion-type detoxification device 10, while being decompressed to an extent by a central scrubber

However, the combustion-type detoxification device 10 may not be disposed depending on a gas to be used in the process chamber 1.

The exhaust gas that has passed through the dry pump 5 is usually at such a high temperature as 150 degrees due to compression heat during exhaust. Meanwhile, an outlet pipe connected to the dry pump 5 is in contact with outside air. Consequently, when passing through the outlet pipe, the exhaust gas is rapidly cooled at ambient temperature, and moisture (water vapor) in the exhaust gas condenses inside the outlet pipe to result in water droplets.

The outlet pipe may be communicating with an exhaust pipe for another treatment equipment in a factory and, due to the water droplets generated in the outlet pipe, a product may be generated at an unexpected place to adhere thereto. To prevent such water droplets, in the outlet pipe of the dry pump 5, a cooling trap as described in Japanese Patent Application Publication No. 2010-16215 is disposed.

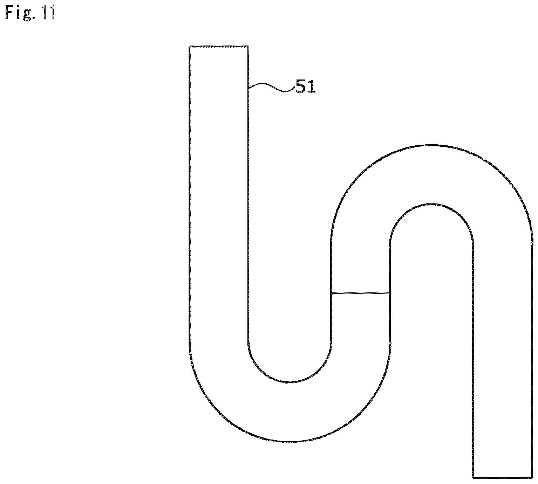

It is necessary to drain the moisture trapped by the cooling trap with attention to prevent the exhaust gas from leaking to the outside. Accordingly, an S-shaped bent pipe 51 as illustrated in FIG. 11 is conventionally disposed below the cooling trap in most cases, and the liquefied moisture (water droplets) is allowed to naturally fall. In this case, as long as the bent pipe 51 is internally filled with water, the exhaust gas is stopped by the water from leaking to the outside. Thus, in this case, a water sealing function can be performed by the bent pipe 51.

However, it may be possible that the pipe is internally decompressed and, when the bent pipe 51 is to be installed, an installation space having a height of not less than a predetermined value including an allowance for the decompression and heights of spaces between bent portions of the pipe is required. In addition, when the bent pipe 51 is installed, due to the decompression, the water may be less likely to naturally fall. Another system is shown in US5469879.

The present invention has been achieved in view of such conventional problems, and an object of the present invention is to provide a system for treating moisture in exhaust gas that can prevent, even in a case where there is not a space for disposing a pipe having a water sealing function, the exhaust gas from leaking to outside when the moisture or the like contained in the exhaust gas is removed, while preventing backflow of water resulting from liquefaction of the moisture in the removal process.

Accordingly, an aspect of the present invention (claim 1) is a system for treating moisture in exhaust gas, the system using a cooling trap to remove the moisture contained in the exhaust gas discharged by a process and including: a tank that stores, as liquid water, the moisture flown out of the cooling trap; a water level measurement means that measures a water level in the tank; a pipe connected to a drainage port for draining the water stored in the tank to outside; a valve disposed in the pipe; and a valve control means that opens the valve to start drainage when the water level in the tank measured by the water level measurement means exceeds a first water level and closes the valve to stop the drainage when a second water level set lower than the first water level is reached, the second water level being provided at a position higher than the drainage port. A warning is further issued when a third water level set lower than the second water level is reached.

When the water level in the tank measured by the water level measurement means exceeds the first water level, the valve is opened to start the drainage. Thus, it is possible to prevent backflow of the water in the tank even when the pipe has a small pipe diameter. Meanwhile, when the water level in the tank reaches the second water level, the valve is closed to stop the drainage.

Thus, the second water level is set so as to prevent the exhaust gas from entering the drain pipe and leaking to the outside. In other words, the second water level is a water level set to seal water. Accordingly, to allow water to completely cover the drainage port, the second water level is required to be provided at a position constantly higher than the drainage port. The tank is in a state where the water is constantly stored therein, and the water level in the tank is kept from becoming not higher than the second level even during the drainage.

The tank can also function to seal water in a drainage line in addition to functioning to store water.

In the system according to the aspect of the present invention (claim 2), the cooling trap and the tank are connected to each other by an unbent pipe.

Since the tank is used to allow water to be sealed, even when the unbent pipe is disposed between the cooling trap and the tank, there is no leakage of the exhaust gas to the outside. Even when there is not an installation space sufficient to allow a bent pipe to be connected between the cooling trap and the tank, the unbent pipe can be used instead. This eliminates need to provide a high-cost bent pipe, and cost is accordingly lower. Even when the unbent pipe is internally decompressed, the water naturally falls with ease.

In the system according to the present invention, the pipe includes a drainage amount adjustment mechanism that adjusts, of the water stored in the tank, an amount of the water to be drained to the outside.

Since the drainage amount adjustment mechanism is included, even if a negative pressure is placed on a drain side, during a period from a time when an instruction to close the valve was given by the valve control means until the valve is completely closed, the water level in the tank is maintained at a position constantly higher than the drainage port by a given value or more. Therefore, the sealing of water in the drainage line is reliably maintained.

The first water level may be a water level set to prevent backflow from the tank toward the cooling trap, and the second water level is a water level set to seal water such that, during the drainage, the exhaust gas is not discharged from the pipe to the outside.

As described above, according to the present invention, the system is configured such that, when the water level in the tank measured by the water level measurement means exceeds the first water level, the valve is opened to start the drainage and, when the second water level is reached, the valve is closed to stop the drainage. Therefore, it is possible to prevent the exhaust gas from entering the drain pipe and leaking to the outside, while preventing the backflow.

Consequently, the tank can also function to seal water in the drainage line in addition to functioning to store water.
FIG. 1 is a configuration diagram of a system for treating moisture in exhaust gas as an embodiment of the present invention;
FIG. 2 illustrates a straight pipe;
FIG. 3 is a side profile view of a cooling trap;
FIG. 4 is a front cross-sectional view of the cooling trap;
FIG. 5 is a cross-sectional view taken along an arrow line A-A in FIG. 4;
FIG. 6 is a diagram illustrating entrance of the exhaust gas into a drain pipe and leakage thereof to outside;
FIG. 7 illustrates an example in which the drain pipe is provided with a drainage amount adjustment mechanism;
FIG. 8 illustrates an example in which the drainage amount adjustment mechanism is configured of an orifice (side cross-sectional view) ;
FIG. 9 is a perspective view of an orifice plate;
FIG. 10 is a flow chart of exhaust gas treatment; and
FIG. 11 illustrates a bent pipe.

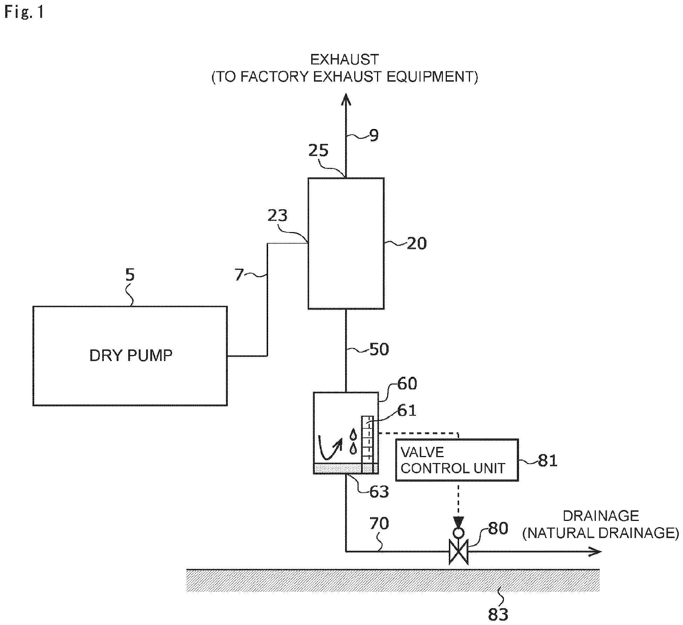

A description will be given below of an embodiment of the present invention. FIG. 1 illustrates a configuration diagram of a system for treating moisture in exhaust gas as the embodiment of the present invention.

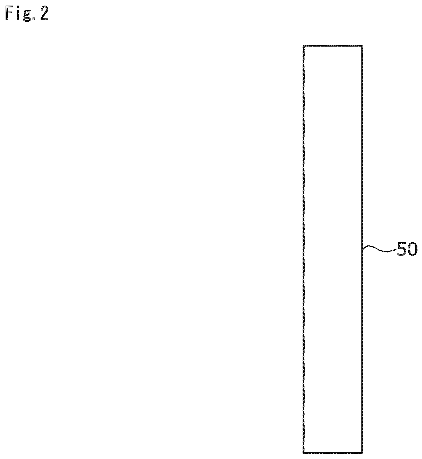

In FIG. 1, an outlet pipe 7 connected to a dry pump 5 is provided with a cooling trap 20. The cooling trap 20 is a device that condensates water vapor in the exhaust gas into water. The water flown out of the cooling trap 20 passes through a straight pipe 50 as illustrated in FIG. 2 and naturally falls to be stored in a tank 60. Conventionally, between the cooling trap 20 and the tank 60, not the straight pipe 50, but a bent pipe 51 has been disposed.

In the tank 60, a water level sensor 61 is disposed. The water stored in the tank 60 is to be drained by natural fall into drainage equipment disposed in a factory and not shown through a drain pipe 70 connected to a drainage port 63 disposed in a bottom surface of the tank 60. Halfway in the drain pipe 70, a drain valve 80 is disposed.

A water level signal resulting from measurement by the water level sensor 61 is input to a valve control unit 81 and, on the basis of a result of determination made by the valve control unit 81, the drain valve 80 is controlled.

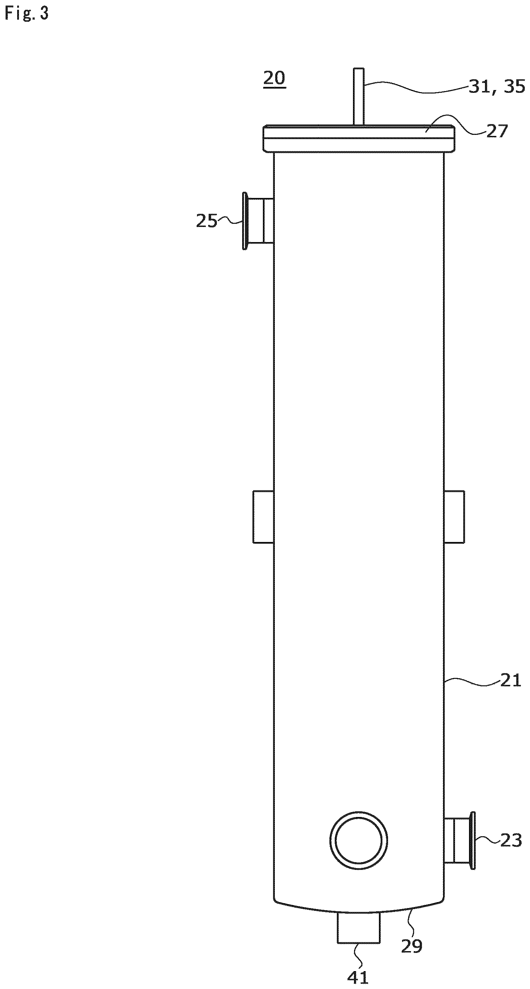

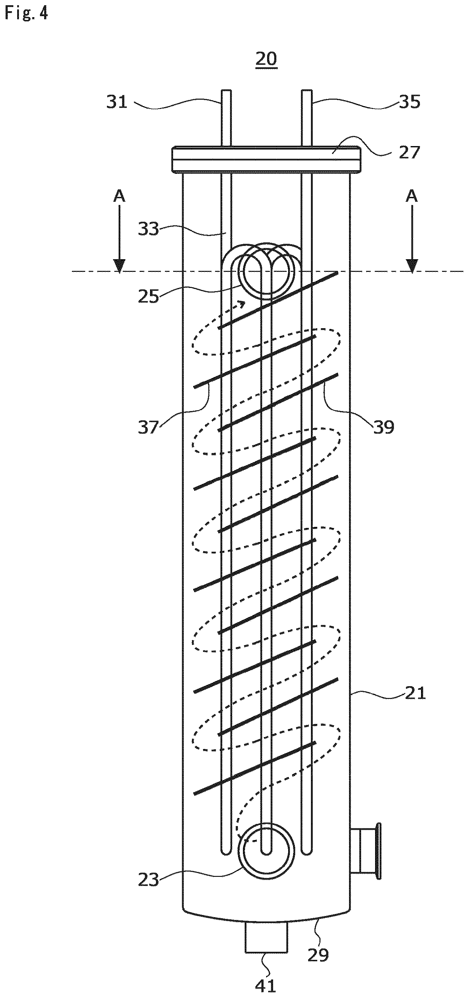

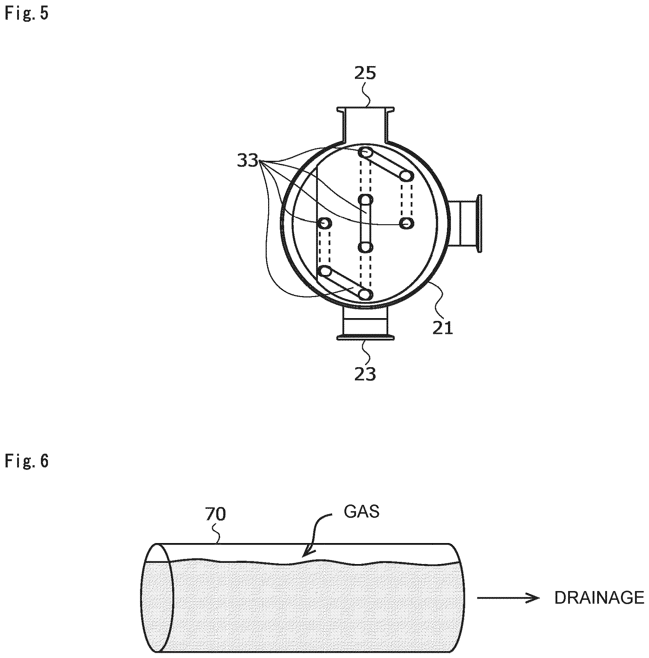

FIG. 3 illustrates a side profile view of the cooling trap 20. FIG. 4 illustrates a front cross-sectional view of the cooling trap 20. FIG. 5 illustrates a cross-sectional view taken along an arrow line A-A in FIG. 4.

The cooling trap 20 includes a cylindrical peripheral wall 21. The outlet pipe 7 is connected to a flow-in port 23 protruding from the peripheral wall 21. Meanwhile, a discharge port 25 protruding from the peripheral wall 21 is connected to a pipe 9 extending to factory exhaust equipment.

To an upper surface of the peripheral wall 21, a disk-shaped lid 27 is attached. Meanwhile, a bottom surface 29 of the peripheral wall 21 is formed in a spherical shape such that water droplets that have fallen to the bottom surface are collected by natural fall to a center thereof. Through the disk-shaped lid 27, a thin pipe 33 having one end portion provided with a water supply port 31 extends. To the water supply port 31, cooling water is supplied from water supply equipment not shown. As illustrated in FIGS. 4 and 5, after extending downward in a vertical direction, the thin pipe 33 is bent in the vicinity of the flow-in port 23 by making a 180-degree directional change to extend upward. Then, the thin pipe 33 makes a 180-degree directional change again in the vicinity of the discharge port 25 to extend downward. After repeatedly extending downward and upward a plurality of times, the thin pipe 33 extends again through the disk-shaped lid 27. The thin pipe 33 has another end portion formed with a water discharge port 35.

On an inner side of the peripheral wall 21, baffles 37 and baffles 39 are alternately combined at regular intervals so as to protrude in different directions and attached obliquely to the thin pipe 33. At the center of the bottom surface 29, a water discharge port 41 is disposed to be connected to the straight pipe 50.

Next, an operation of the embodiment of the present invention will be described.

The high-temperature exhaust gas that has passed through the dry pump 5 enters the cooling trap 20 from the flow-in port 23 thereof to slowly flow upward, while having the flow thereof interrupted by the baffles 37 and the baffles 39 and changing a direction of the flow leftward and rightward, as indicated by the dotted line in the drawing. At this time, the exhaust gas is cooled through the thin pipe 33. As a result, the water vapor condensates within the cooling trap 20. Then, the water droplets resulting from the condensation in the cooling trap 20 collect at the bottom surface 29 of the cooling trap 20. Then, the moisture (the moisture means a total amount of the removed moisture herein, and results in a state of liquefied water) collected herein naturally falls into the tank 60 through the straight pipe 50.

Since the drain valve 80 is closed, the moisture is stored in a state of liquid water in the tank 60. Then, whether or not a water level of the water stored in the tank 60 exceeds a higher water level H set by the valve control unit 81 is determined by the valve control unit 81. The higher water level H is equivalent to a first water level. Upon determining that the higher water level H is exceeded, the valve control unit 81 transmits an open signal to the drain valve 80 to open the drain valve 80.

As a result, the water in the tank 60 is drained. The higher water level H is a water level set so as to prevent the water stored in the tank 60 from overflowing and flowing backward toward the dry pump 5. Since the straight pipe 50 and the outlet pipe 7 have small pipe diameters, backflow is easy to occur. Accordingly, the higher water level H is set with a predetermined margin.

With the drainage, the water level gradually lowers, and whether or not the water level is not higher than a lower water level L set by the valve control unit 81 is determined by the valve control unit 81. The lower water level L is equivalent to a second water level. Then, upon determining that the water level is not higher than the lower water level L, the valve control unit 81 transmits a close signal to the drain valve 80 to close the drain valve 80.

Then, water is stored again in the tank 60.

Thus, the lower water level L is set so as to prevent the exhaust gas from entering the drain pipe 70 and leaking to outside, as illustrated in FIG. 6. In other words, the lower water level L is a water level set to seal water. Accordingly, to allow water to completely seal the drainage port 63, the lower water level L is required to be provided at a position constantly higher than the drainage port 63. The tank is in a state where water is constantly stored therein, and the water level in the tank is kept from becoming not higher than the lower water level L even during the drainage.

Since the tank 60 is used to allow water to be sealed, even when the straight pipe 50 is disposed between the cooling trap 20 and the tank 60 instead of the bent pipe 51 disposed conventionally, there is no leakage of the exhaust gas to the outside. If it is assumed that a distance between the cooling trap 20 and the tank 60 is, e.g., about 20 cm and a distance between the bottom surface of the cooling trap 20 and a floor 83 is about 30 to 50 cm, even in this case, the straight pipe 50 can be used between the cooling trap 20 and the tank 60, though the bent pipe 51 cannot usually be disposed with these distances.

Therefore, even when there is not an installation space sufficient to allow the bent pipe 51 to be disposed, no problem occurs. In addition, since there is no need to provide the high-cost bent pipe 51, the system can accordingly be configured at lower cost. Moreover, since the straight pipe 50 is disposed, even when the straight pipe 50 is internally decompressed, water naturally falls with ease. Thus, the tank 60 can also perform a function of sealing water in the drainage line in addition to a function of storing water in the tank 60.

Additionally, when a signal from the water level sensor 61 represents that a highest water level HH corresponding to a highest limit value of the water level is exceeded, the valve control unit 81 issues warning of an abnormally high water level. Meanwhile, when the water level becomes not higher than a lowest water level LL corresponding to a lowest limit value of the water level, the valve control unit 81 issues warning of an abnormally low water level.

Next, a description will be given of adjustment of an amount of drainage.

As described previously, upon determining that the water level in the tank 60 is not higher than the lower water level L, the valve control unit 81 transmits the close signal to the drain valve 80 to close the drain valve 80.

Then, water is stored again in the tank 60.

However, if a magnitude of a drain-side negative pressure is large, a speed of the drainage of water flowing in the drain pipe 70 may be higher than that in a case of natural fall. In such a case, there is a time lag between the transmission of the close signal from the valve control unit 81 to the drain valve 80 and complete closing of the drain valve 80. As a result, a given amount of water may possibly flow through the drain pipe 70 to be drained during the time lag. In addition, at this time, the water level in the tank 60 may conceivably be not higher than the lowest water level LL.

To avoid such a drawback, in the drain pipe 70, a drainage amount adjustment mechanism is provided to limit a force of the water stored in the tank 60.

Next, a description will be given of the drainage amount adjustment mechanism.

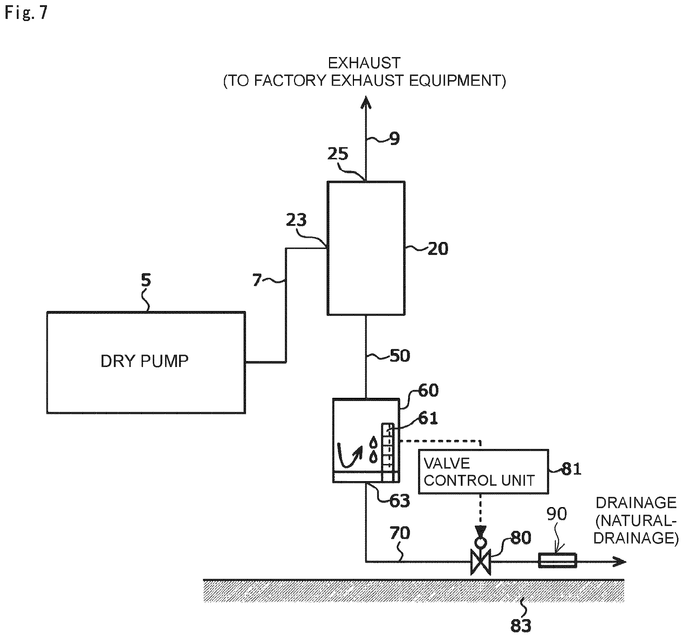

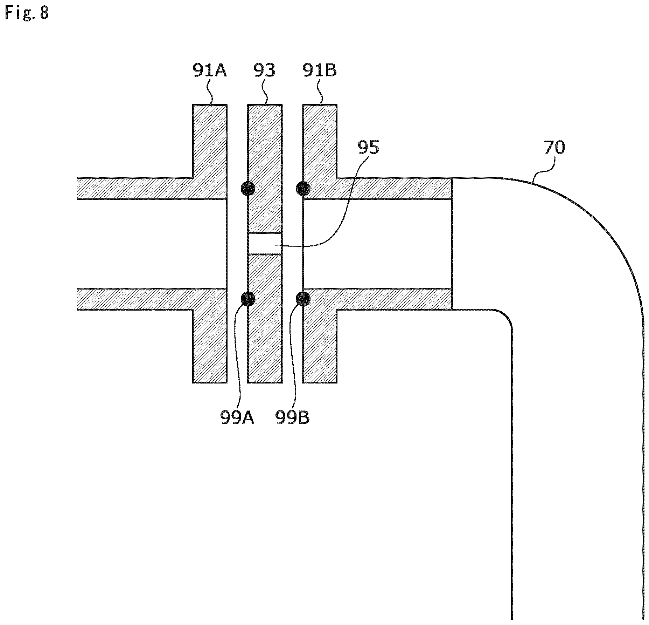

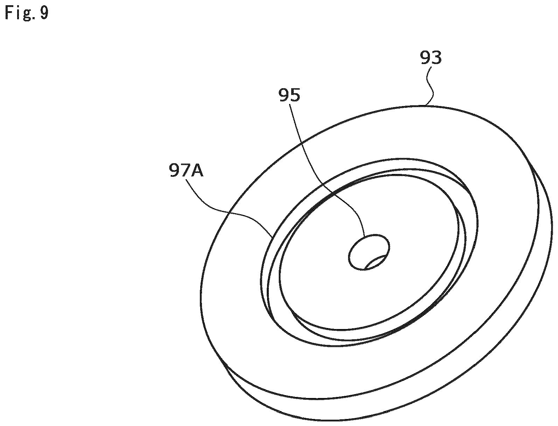

In FIG. 7, a drainage amount adjustment mechanism 90 is provided downstream of the drain valve 80. However, the drainage amount adjustment mechanism 90 may also be provided upstream of the drain valve 80. FIG. 8 illustrates an example in which the drainage amount adjustment mechanism 90 is configured of an orifice. As illustrated in FIG. 8, in this orifice, between a flange 91A and a flange 91B, an orifice plate 93 formed of, e.g., polyvinyl chloride as the same material as that forming the drain pipe 70 is interposed. FIG. 9 illustrates a perspective view of the orifice plate 93.

At a center of the orifice plate 93, a through hole 95 is formed to extend therethrough. In addition, in a portion in which an end surface of the flange 91A and a left surface of the orifice plate 93 are in contact, a sealing groove 97A is circularly engraved in the left surface of the orifice plate 93 and, in the sealing groove 97A, an O-ring 99A is embedded. Meanwhile, in a portion in which an end surface of the flange 91B and a right surface of the orifice plate 93 are in contact, a sealing groove not shown is circularly engraved in the end surface of the flange 91B and, in the sealing groove, an O-ring 99B is embedded. The through hole 95 of the orifice plate 93 has a diameter of, e.g., 5 mm, while the drain pipe 70 has a pipe inner diameter of 20 mm.

Thus, when the drainage amount adjustment mechanism 90 is configured of the orifice, even when the orifice is attached after completion of equipment, an attaching operation can easily be performed.

However, the drainage amount adjustment mechanism 90 may also have a structure in which the drain pipe 70 has a reduced pipe diameter in consideration of the magnitude of the negative pressure. In this case, the pipe diameter of the drain pipe 70 may be reduced appropriately so as to prevent the water level in the tank 60 from reaching the lowest water level LL during a period from the detection of the lower water level L as the water level in the tank 60 until the complete closing of the drain valve 80. It may also be possible to allow the pipe diameter to include a given allowance. When the pipe diameter of the drain pipe 70 is thus reduced also, even after the completion of the equipment, a pipe replacement operation is easy.

Alternatively, it may also be possible to separately dispose a valve as the drainage amount adjustment mechanism 90 and adjust an amount of drainage by using the valve control unit 81. It is however at least required to adjust the amount of drainage in such a manner that, from a time when the lower water level L is detected as the water level in the tank 60, the valve control unit 81 tightens the drain valve 80 without separately disposing a valve.

Thus, even when the magnitude of the drain-side negative pressure is large, there is no possibility that, after the water level in the tank 60 becomes not higher than the lower water level L and the close signal is transmitted from the valve control unit 81 to the drain valve 80, the water level in the tank 60 becomes not higher than the lowest water level LL during the time lag until the drain valve 80 is completely closed in response to the close signal.

As a result, the water level in the tank is maintained at a position constantly higher than the drainage port by a given value or more, and the sealing of water in the drainage line is reliably maintained.

Note that the present embodiment has been described on the assumption that, in the cooling trap 20, the water vapor changes to the water droplets. However, the present embodiment is not limited to the water vapor, and is similarly applicable to exhaust gas containing alcohol, a resist solution, or the like.

- 5: Dry pump
- 20: Cooling trap
- 23: Flow-in port
- 25: Discharge port
- 31: Water supply port
- 33: Thin pipe
- 35: Water discharge port
- 37, 39: Baffle
- 50: Straight pipe
- 60: Tank
- 61: Water level sensor
- 63: Drainage port
- 70: Drain pipe
- 80: Drain valve
- 81: Valve control unit
- 90: Drainage amount adjustment mechanism
- 93: Orifice plate

## Claims

1. A system for treating moisture in exhaust gas, the system using a cooling trap (20) to remove the moisture contained in the exhaust gas discharged by a process and comprising:
a tank (60) that stores, as liquid water, the moisture flown out of the cooling trap (20);
a water level measurement means (61) that measures a water level in the tank (60);
a pipe (70) connected to a drainage port (63) for draining the water stored in the tank (60) to outside;
a valve (80) disposed in the pipe (70); and
a valve control means (81) that opens the valve (80) to start drainage when the water level in the tank (60) measured by the water level measurement means (61) exceeds a first water level (H) and begins closing the valve (80) when a second water level (L) set lower than the first water level (H) is reached,
the second water level (L) being provided at a position higher than the drainage port (63), and
issues a warning when a third water level (LL) set lower than the second water level (L) is reached, **characterized in that**
the pipe (70) includes a drainage amount adjustment mechanism that adjusts, of the water stored in the tank (60), an amount of water to be drained to the outside, such that, during a period of time between when the valve control means (81) begins closing the valve (80) and the valve (80) being completely closed, the water level in the tank (60) remains above the drainage port (63).

2. The system for treating the moisture in the exhaust gas according to claim 1, wherein the cooling trap and the tank are connected to each other by an unbent pipe.

## Patentansprüche

1. System zum Behandeln von Feuchtigkeit in Abgas, wobei das System eine Kühlfalle (20) verwendet, um die Feuchtigkeit zu entfernen, die in dem Abgas enthalten ist, das durch einen Prozess abgegeben wird, und umfassend:
einen Tank (60), der die Feuchtigkeit, die aus der Kühlfalle (20) ausgeflossen ist, als flüssiges Wasser speichert;
ein Wasserstandsmessmittel (61), das einen Wasserstand im dem Tank (60) misst;
ein Rohr (70), das mit einem Ablassanschluss (63) verbunden ist, zum Ablassen des Wassers, das in dem Tank (60) gespeichert ist, nach außen;
ein Ventil (80), das in dem Rohr (70) angeordnet ist; und
ein Ventilsteuermittel (81), das das Ventil (80) öffnet, um mit dem Ablassen zu beginnen, wenn der Wasserstand in dem Tank (60), der durch das Wasserstandsmessmittel (61) gemessen wird, einen ersten Wasserstand (H) überschreitet, und beginnt, das Ventil (80) zu schließen, wenn ein zweiter Wasserstand (L), der niedriger als der erste Wasserstand (H) eingestellt ist, erreicht wird,
wobei der zweite Wasserstand (L) an einer Position bereitgestellt ist, die höher als der Ablassanschluss (63) ist, und
Ausgeben einer Warnung, wenn ein dritter Wasserstand (LL), der niedriger als der zweite Wasserstand (L) eingestellt ist, erreicht wird **dadurch gekennzeichnet, dass**
das Rohr (70) einen Ablassmengenanpassmechanismus einschließt, der, von dem Wasser, das in dem Tank (60) gespeichert ist, eine Wassermenge derart anpasst, die abgelassen werden soll, dass während einer Zeitspanne zwischen dem Beginn des Schließens des Ventils (80) durch die Ventilsteuereinrichtung (81) und dem vollständigen Schließen des Ventils (80) der Wasserstand in dem Tank (60) über der Ablassöffnung (63) verbleibt.

2. System zum Behandeln der Feuchtigkeit in dem Abgas nach Anspruch 1, wobei die Kühlfalle und der Tank durch ein ungebogenes Rohr miteinander verbunden sind.

## Revendications

1. Système permettant de traiter de l'humidité dans un gaz d'échappement, le système utilisant un piège froid (20) pour éliminer l'humidité contenue dans le gaz d'échappement déchargé par un procédé et comprenant :
un réservoir (60) qui stocke, en tant qu'eau liquide, l'humidité s'écoulant à l'extérieur du piège froid (20) ;
un moyen de mesure de niveau d'eau (61) qui mesure un niveau d'eau dans le réservoir (60) ;
un tuyau (70) raccordé à un orifice d'évacuation (63) permettant d'évacuer l'eau stockée dans le réservoir (60) à l'extérieur ;
une vanne (80) disposée dans le tuyau (70) ; et
un moyen de commande de vanne (81) qui ouvre la vanne (80) pour démarrer l'évacuation lorsque le niveau d'eau dans le réservoir (60) mesuré par le moyen de mesure de niveau d'eau (61) dépasse un premier niveau d'eau (H) et commence à fermer la vanne (80) lorsqu'un deuxième niveau d'eau (L) réglé plus bas que le premier niveau d'eau (H) est atteint,
le deuxième niveau d'eau (L) étant fourni au niveau d'une position plus élevée que l'orifice d'évacuation (63), et
délivre un avertissement lorsqu'un troisième niveau d'eau (LL) réglé plus bas que le deuxième niveau d'eau (L) est atteint, **caractérisé en ce que**
le tuyau (70) comporte un mécanisme d'ajustement de quantité d'évacuation qui ajuste, de l'eau stockée dans le réservoir (60), une quantité d'eau à évacuer à l'extérieur, de telle sorte que, pendant un laps de temps entre le moment où le moyen de commande de vanne (81) commence à fermer la vanne (80) et la soupape (80) étant complètement fermée, le niveau d'eau dans le réservoir (60) demeure au-dessus de l'orifice d'évacuation (63).

2. Système permettant de traiter l'humidité dans le gaz d'échappement selon la revendication 1, dans lequel le piège froid et le réservoir sont raccordés l'un à l'autre par un tuyau non coudé.
